# FASCICULE DE BREVET EUROPEEN

(11) **EP 3 982 101 B1**
(45) Date de publication et mention de la délivrance du brevet: **21.08.2024**
(21) Numéro de dépôt: 21201858.4
(22) Date de dépôt: 11.10.2021
(51) Int. Cl.: G01M 7/02, H04W 4/38, H04W 4/70

(54) **SYSTÈME ET PROCÉDÉ DE GÉNÉRATION ET DE COLLECTE DE DONNÉES VIBRATOIRES EN VUE DE LA SURVEILLANCE D'UNE STRUCTURE**
SYSTEM UND VERFAHREN ZUR ERZEUGUNG UND SAMMLUNG VON SCHWINGUNGSDATEN ZUR ÜBERWACHUNG EINER STRUKTUR
SYSTEM AND METHOD FOR GENERATING AND COLLECTING VIBRATORY DATA IN ORDER TO MONITOR A STRUCTURE

(30) Priorité: 12.10.2020 FR 2010409
(43) Date de publication de la demande: 13.04.2022
(73) Titulaire: SERCEL, 44470 Carquefou (FR)
(72) Inventeur: LAINE, Jérôme, 44470 CARQUEFOU (FR); DELACOURT, Hervé, 44470 CARQUEFOU (FR); AUDONNET, Nicolas, 44470 CARQUEFOU (FR)
(74) Mandataire: Ipsilon

(56) Documents cités:
- WO-A1-2020/061620
- KR-A- 20190 000 006
- NL-B1- 2 022 301
- US-A1- 2018 049 127
- US-A1- 2018 149 516

## Description

### DOMAINE DE L'INVENTION

La présente invention concerne de manière générale la génération et la collecte de données en vue de la surveillance de l'état d'une structure, telle qu'un pont.

### ART ANTERIEUR

Il est utile de pouvoir surveiller l'état d'une structure, telle qu'un pont, pour anticiper une dégradation de ladite structure et pouvoir effectuer des travaux de maintenance lorsqu'il en est encore temps.

Une méthode d'évaluation traditionnelle permettant de surveiller l'état d'une structure consiste en une inspection visuelle de la structure pour rechercher et quantifier l'évolution de fissures. Cependant, cette méthode ne permet de suivre que les défauts visibles de la structure, de sorte qu'une telle méthode ne permet pas de suivre de manière fiable l'évolution de l'état de la structure et d'anticiper une maintenance.

Il est aussi possible de surveiller l'état d'une structure de type pont en intégrant dans la structure du pont des jauges de contraintes. Cependant, une telle intégration de jauges de contrainte doit être prévue dès la conception du pont, et ne peut pas être réalisée sur un pont existant.

Le document WO2020061620 A1 décrit un dispositif de surveillance de poteau de service public comprenant : un corps conçu pour être accouplé à un poteau de service public, un dispositif de vibration disposé sur le corps et conçu pour générer des vibrations sur le poteau de service public ou dans ce dernier, un capteur disposé sur le corps afin de mesurer les vibrations à l'intérieur du poteau de service public généré par le dispositif de vibration, et un dispositif de commande permettant de fournir un signal de lancement au dispositif de vibration, et de recevoir des données mesurées en provenance du capteur.

Le document NL2022301 B1 décrit un dispositif de détection de vibration comprenant un capteur de vibration. Le signal de vibration est converti dans le domaine fréquentiel pour générer un ensemble de données de taille réduite. Une première interface de communication fonctionne à un premier débit de données maximal pour transmettre l'ensemble de données généré à un dispositif de passerelle sans fil, et une seconde interface de communication fonctionne à un second débit de données maximum, supérieur au premier débit de données maximum, pour transmettre le signal de vibration via la seconde interface de communication.

Le document US2018049127 A1 décrit un procédé de téléchargement automatique dans lequel un signal de réveil est reçu par un module de transmission sans fil à faible consommation d'énergie d'un dispositif portable de capture d'informations. Un module de transmission sans fil à forte consommation d'énergie du dispositif portable de capture d'informations est actionné en fonction du signal de réveil. Une connexion entre le module de transmission sans fil à forte consommation et une première station relais est créée après actionnement du module de transmission sans fil à forte consommation. Puis le module de transmission sans fil à faible consommation d'énergie est arrêté après que la connexion a été créée. Des données de téléchargement du dispositif portable de capture d'informations sont alors transmises à une seconde station relais par la connexion à la première station relais.

Le document US2018149516 A1 décrit une unité de surveillance qui comprend un capteur de vibration pour surveiller une machine et un deuxième capteur de vibrations de moindre performance métrologique, qui consomme peu d'énergie de batterie. Le deuxième capteur prend périodiquement une mesure de vibration, pour évaluer si la machine est dans un état éligible pour subir un diagnostic.

Le document KR20190000006 A décrit un moniteur de vibration disposé à l'extérieur d'une installation mécanique d'usine pour acquérir et transmettre des données de mesure de vibration via un réseau LoRaWAN et un serveur d'application qui reçoit, stocke et gère les données reçues via une passerelle et un serveur réseau.

La présente invention a pour but de proposer un nouveau système et procédé de collecte de données en vue de la surveillance de l'état d'une structure, permettant de pallier tout ou partie des problèmes exposés ci-dessus.

### RESUME DE L'INVENTION

Il est proposé un système de génération et de collecte de données en vue de la détermination de l'état d'une structure, selon la revendication 1.

Le système peut aussi comporter une ou plusieurs des caractéristiques additionnelles telles que définies dans les revendications 2 à 12.

Il est aussi proposé un procédé de génération et de collecte de données en vue de la détermination de l'état d'une structure, selon la revendication 13.

Le procédé peut aussi être conforme à la revendication 14 ou 15.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- [Fig. 1] la Figure 1 est une vue schématique d'un système de génération et de collecte de données selon un mode de réalisation de l'invention;
- [Fig. 2] la Figure 2 est un graphique illustrant l'état de fonctionnement des modules de communication radio LoRaWAN et Wifi d'un noeud d'un système d'acquisition d'un système de génération et de collecte de données selon un mode de réalisation de l'invention;
- [Fig. 3] la Figure 3 est une vue schématique de principe d'un noeud d'un système d'acquisition d'un système de génération et de collecte de données selon un mode de réalisation de l'invention;
- [Fig. 4] la Figure 4 est une vue schématique de principe d'une passerelle d'un système de génération et de collecte de données selon un mode de réalisation de l'invention;
- [Fig. 5] la Figure 5 est un schéma bloc montrant plusieurs étapes d'un procédé de surveillance selon un mode de réalisation de l'invention.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

En référence aux figures, on a représenté un système de génération et de collecte de données en vue de la détermination de l'état d'une structure, telle qu'un pont. La conception dudit système permet de bénéficier d'un fonctionnement fiable tout en présentant une consommation d'énergie réduite. Les données collectées permettent de vérifier la fiabilité de l'état de la structure pour anticiper sa maintenance et/ou prévenir un risque d'effondrement.

### Structure à surveiller

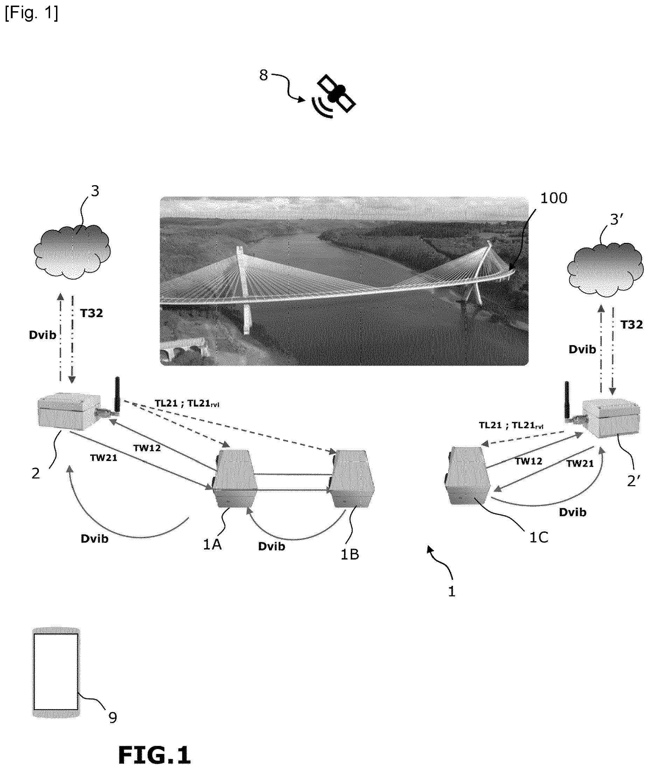

Dans l'exemple illustré aux figures et plus particulièrement à la Figure 1, la structure 100 à surveiller est un pont routier sur lequel sont destinés à circuler des véhicules, tels que des voitures ou des camions. La structure à surveiller peut aussi être un pont pour piéton ou un pont ferroviaire. On peut aussi prévoir que la structure à surveiller soit un autre type de structure de génie civil public, par exemple un tunnel, une digue, un quai, un barrage, une écluse, voire un mur de soutènement, un port ou toute infrastructure portuaire. Plus généralement, l'invention peut être appliquée à tout ouvrage de génie civil, aéroport, château d'eau, ou bâtiment industriel (usine, entrepôt, hangar, centrale électrique...) ou résidentiel (notamment les gratte-ciel et tour) ou stade.

La structure 100 peut être un équipement « lourd », de type industriel, comme un portique de levage, ou d'équipement comme une antenne ou un poteau électrique, ou une structure off-shore comme une plateforme ou une éolienne, flottantes ou ancrées au sol. Certains navires ou barges peuvent également bénéficier du système de surveillance selon l'invention, la liste n'étant pas exhaustive.

### Système d'acquisition

Comme illustré à la Figure 1, le système de génération et de collecte de données inclut un système d'acquisition 1 qui comprend une pluralité de dispositifs 1A, 1B, 1C d'acquisition de signaux vibratoires. Par la suite, chaque dispositif d'acquisition de signaux vibratoires est appelé noeud. Le système d'acquisition 1 permet de générer des données vibratoires et de les transmettre à un système 2, 2' de passerelle décrit ci-après.

Il est décrit ci-dessous des caractéristiques relatives à un noeud 1A qui peuvent s'appliquer aux autres noeuds 1B, 1C du système d'acquisition 1.

### Système de capteur

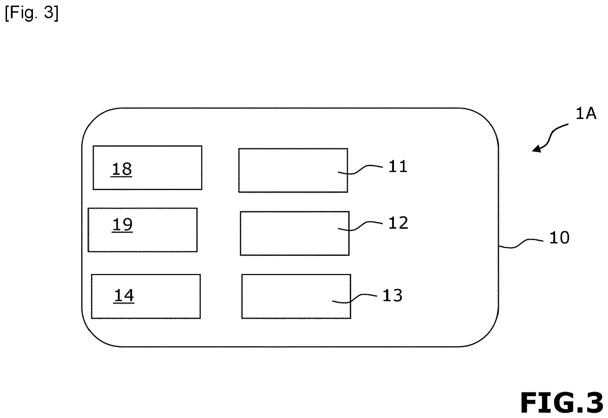

Comme schématisé à la Figure 3, le noeud 1A comprend un système 18 de capteur qui inclut au moins un capteur vibratoire (encore appelé capteur acoustique) qui comprend de préférence un accéléromètre. Le système de capteur permet d'acquérir des signaux vibratoires correspondant au bruit de fond vibratoire de la structure. Avantageusement, ces signaux vibratoires sont détectés de façon régulière par le système de capteur et selon des instructions reçues par le noeud comme expliqué ci-après.

Le ou chaque capteur vibratoire acquiert des signaux vibratoires (ou acoustiques) qui sont convertis en données numériques par un convertisseur analogique-numérique, qui peut être intégré ou raccordé au capteur vibratoire. Les données numériques sont enregistrées dans une mémoire du noeud, de préférence sous forme de fichiers, pour former des données vibratoires destinées à être transmises au système de passerelle. Les données vibratoires peuvent être des données brutes correspondant à la numérisation des signaux vibratoires acquis, ou peuvent être des données dites «traitées » qui ont subi un traitement par exemple pour supprimer des bruits parasites. Ainsi les données vibratoires peuvent ou non subir des étapes de traitement avant d'être ultérieurement collectées. La collecte des données peut être réalisée à l'aide d'un système de passerelle comme expliqué ci-après.

Préférentiellement, le système de capteur comprend trois capteurs vibratoires agencés de façon à former un orthogone. Cet ensemble de trois capteurs vibratoires peut se présenter sous la forme d'une carte de type QuietSeis (marque déposée) fabriquée par la société Sercel.

Selon un aspect particulier, le ou chaque capteur vibratoire est un capteur digital, par exemple un capteur d'accélération micro-usiné (encore appelé « micro-machined accelerometers », ou "MEMS-based digital accelerometer" en anglais). Le capteur digital est configuré pour acquérir les signaux vibratoires et effectuer une transformation analogique-numérique des signaux vibratoires pour obtenir des données numériques qui sont alors mémorisées dans une mémoire de données du noeud.

### Modules de communication radio

Comme illustré à la Figure 3, le noeud 1A comprend aussi une unité 11 de pilotage et plusieurs modules de communication radio 12, 13. Un premier module de communication radio 12 est configuré pour communiquer avec le système de passerelle 2, 2' selon un premier protocole de communication radio pour permettre de recevoir un signal TL21 transmis par le système 2, 2' de passerelle. Un deuxième module de communication radio 13 est configuré pour communiquer avec le système de passerelle 2, 2' selon un deuxième protocole, distinct du premier protocole, pour transmettre un signal TW12 de requête d'instruction d'activité, recevoir une instruction d'activité TW21 (ou tâche), par exemple une activité d'acquisition, et transmettre des données vibratoires Dvib.

Le noeud 1A inclut aussi une source d'alimentation interne 14, telle que des piles à usage unique, de préférence au lithium. En variante on peut prévoir d'utiliser une ou des batteries.

L'unité de pilotage 11 comprend un ou plusieurs processeurs permettant d'exécuter un ou des programmes informatiques, par exemple pour lancer une phase d'acquisition de signaux vibratoires par le système de capteur afin de générer des données vibratoires. Le noeud 1A comprend une mémoire de données dans laquelle les données relatives aux signaux vibratoires acquis sont enregistrées et qui peut faire partie de l'unité de pilotage 11 ou être séparée.

Le noeud 1A comprend aussi un module de communication radio, de préférence confondu avec le deuxième module de communication 13, qui permet au noeud de communiquer avec au moins l'un des autres noeuds, de préférence un noeud voisin, tel que le noeud 1B, du système d'acquisition 1. La communication radio entre noeuds est illustrée à la Figure 1 qui montre l'envoi de données vibratoires Dvib du noeud 1B au noeud 1A, comme expliqué ci-après.

En particulier le deuxième protocole de communication radio utilisé par le deuxième module de communication radio 13 est de préférence un protocole qui permet aux noeuds du système d'acquisition 1 de pouvoir communiquer de proche en proche, et ainsi de permettre à un noeud de pouvoir communiquer avec au moins un noeud voisin et/ou avec une passerelle de communication radio du système 2, 2' de passerelle. En variante, on pourrait prévoir que le deuxième protocole utilisé par un noeud pour transmettre les données vibratoires à la passerelle soit distinct du protocole utilisé pour communiquer entre deux noeuds.

Le premier protocole de communication radio présente une consommation d'énergie inférieure à celle du deuxième protocole de communication radio et de préférence une portée supérieure à celle du deuxième protocole de communication radio.

Selon un aspect particulier, le premier protocole de communication radio est un protocole de type LPWAN (pour Low Power Wide Area Network en anglais), de préférence un protocole de type LoRaWAN (pour Long Range Wide Area Network en anglais, dont la traduction est réseau étendu longue portée en français) encore appelé usuellement LoRa (pour Long Range en anglais, dont la traduction est longue portée en français). Plus précisément, le protocole LoRaWAN est un protocole de communication pour l'internet des objets qui utilise une technique de modulation par étalement de spectre appelée LoRa. Le premier module de communication radio 12 peut ainsi être formé par une puce LoRa incluant un processeur qui peut être considéré comme faisant partie de l'unité de pilotage 11.

Préférentiellement, le deuxième protocole de communication radio présente un débit supérieur au débit du premier protocole de communication radio. Le deuxième protocole est de préférence un protocole de type Wifi, et en particulier un protocole de type Wifi maillé, encore appelé Wifi Mesh. Le deuxième module de communication radio 13 peut ainsi comprendre une puce Wifi incluant un processeur qui peut être considéré comme faisant partie de l'unité de pilotage 11.

Dans l'exemple illustré aux figures, le deuxième protocole est de type Wifi Mesh pour permettre à chaque noeud 1A, 1B, 1C de communiquer avec un noeud voisin, ou avec le système de passerelle pour un noeud voisin du système de passerelle, pour transmettre ainsi de proche en proche les données vibratoires générées jusqu'au système 2, 2' de passerelle qui les collecte.

Dans les modes de réalisation présentés ci-après, le premier protocole de communication est de type LoRaWAN et le deuxième protocole de communication de type Wifi, en particulier Wifi Mesh, mais d'autres protocoles de communication peuvent être utilisés pour les premier et deuxième protocoles de communication. En particulier, les puces utilisées peuvent mettre en oeuvre d'autres protocoles de communications.

Le noeud 1A peut inclure une puce GNSS configurée pour recevoir une donnée d'horloge de référence. Néanmoins la puce GNSS peut ne pas être opérationnelle si le noeud 1A se trouve sous la structure. Dans ce cas il peut être utile de prévoir que le système de passerelle, de préférence situé à proximité mais dans une zone où il n'est pas masqué par la structure, soit muni d'une puce GNSS lui permettant de synchroniser son horloge interne et de transmettre une donnée correspondante pour la synchronisation des horloges internes des noeuds du système d'acquisition.

L'unité de pilotage 11 peut comprendre un module de traitement configuré pour effectuer un traitement des données vibratoires brutes fournies par le système de capteur avant leur transmission au système 2, 2' de passerelle. Ce traitement (ou prétraitement) peut aussi être effectué de manière alternative ou additionnelle au niveau du système 2, 2' de passerelle.

Le traitement peut inclure un filtrage (suppression de bruits parasites) et/ou une compression des données fournies par le système de capteur pour permettre de limiter le volume de données transmises et de simplifier leur exploitation au niveau d'un système 3,3' de serveur distant présenté ci-après.

### Boîtier

Le noeud 1A comprend un boîtier 10 qui loge les composants du noeud et qui est de préférence étanche.

Préférentiellement, le boîtier 10 est dépourvu de connecteurs physiques d'entrée/sortie. Selon un aspect particulier, le boîtier 10 est muni d'une LED reliée à une carte électronique du boîtier pour permettre d'identifier de manière discrète l'état de fonctionnement du noeud.

Le noeud 1A comprend une ou des antennes permettant de communiquer selon les différents protocoles de communication choisis. On peut prévoir qu'une antenne soit commune à la communication selon des protocoles de communication radio différents ou prévoir une antenne distincte par protocole de communication radio.

La ou chaque antenne est de préférence intégrée dans le boîtier 10. L'absence d'antenne extérieure permet de limiter le risque de détérioration du noeud et permet au noeud de se présenter visuellement de manière discrète, sans attirer l'attention.

Comme schématisé à la Figure 3, le boîtier 10 loge un interrupteur magnétique 19 pour l'arrêt et la mise en marche du circuit d'alimentation électrique du noeud qui est actionnable depuis l'extérieur du boîtier 10 par un aimant pour le faire basculer dans un état ouvert ou fermé. L'absence d'interrupteur à l'extérieur du boîtier permet de limiter le risque qu'un tiers non autorisé agisse sur le noeud.

Comme détaillé ci-après, le noeud 1A est configuré pour, à l'état fermé de l'interrupteur 19, de préférence après une phase d'initialisation permettant son paramétrage, être en sommeil ou en veille la majorité du temps de manière à offrir une autonomie de plusieurs années, par exemple de l'ordre de 5 ans, tout en permettant au système 2, 2' de passerelle de commander le réveil du noeud 1A pour exécuter une activité particulière, telle qu'une opération d'acquisition de signaux vibratoires.

Comme expliqué ci-après, le noeud 1A peut entrer dans un mode sommeil où la puce LoRa et la puce Wifi sont éteintes de sorte que la consommation d'énergie du noeud est très faible. Pour autant, un circuit d'horloge interne du noeud reste actif pour pouvoir déclencher des phases d'écoute correspondant à un mode veille.

En mode veille, la puce LoRa est activée tandis que la puce Wifi reste éteinte, ce qui permet de limiter la consommation d'énergie tout en permettant au noeud de recevoir des instructions du système 2, 2' de passerelle. Le noeud 1A peut aussi entrer dans un mode démarré où la puce Wifi est activée de manière à permettre au noeud d'effectuer des activités nécessitant plus de ressources informatiques que celles effectuées en mode veille, telles que la communication avec le système de passerelle selon un débit de données plus important et le lancement d'une activité telle qu'une phase d'acquisition de signaux vibratoires.

Comme rappelé ci-dessus, les caractéristiques présentées pour le noeud 1A sont aussi applicables aux autres noeuds 1B, 1C du système d'acquisition 1.

Chaque noeud du système d'acquisition est ainsi autonome pendant une longue durée grâce à l'usage d'une source d'alimentation interne et à l'usage de technologies de communication sans fil pilotées de manière à ne nécessiter qu'une faible consommation d'énergie.

Le système d'acquisition 1 est ainsi aisé à installer à demeure sur la structure, puisque, une fois le système déployé, l'opérateur n'aura pas besoin d'agir physiquement dessus pendant une longue période.

Chaque noeud est considéré comme étant intelligent par sa capacité à être en sommeil ou en veille la majorité du temps et de se réveiller (ou démarrer) lors de la réception d'un signal particulier, en particulier pour lancer une phase d'acquisition de signaux acoustiques vibratoires.

### Système de passerelle

Le système 2, 2' de passerelle permet de communiquer avec le système d'acquisition 1 pour commander la génération de données vibratoires et collecter ces données. Le système 2, 2' de passerelle permet aussi de communiquer avec un système 3, 3' de serveur distant pour, d'une part, transmettre les données vibratoires collectées qui peuvent alors être analysées à l'aide d'un programme d'analyse modale opérationnelle et d'autre part recevoir une instruction T32 comme schématisé à la Figure 1 et détaillé ci-après.

Le système 2, 2' de passerelle comprend au moins une passerelle 2 encore appelée "gateway" en anglais. Dans l'exemple illustré à la Figure 1, ledit système 2, 2' de passerelle comprend aussi une passerelle 2' supplémentaire. La présence d'une passerelle supplémentaire permet de bénéficier d'une fiabilité de fonctionnement grâce à la possibilité d'identifier un dysfonctionnement sur une passerelle en comparant entre les signaux émis par les passerelles. Ainsi un problème de transmission entre le système de serveur et une passerelle peut être détecté par le système d'acquisition 1 qui ne reçoit alors plus les mêmes informations depuis les deux passerelles, l'une ayant reçu une nouvelle instruction du système de serveur distant, tandis que l'autre passerelle ne l'a pas reçu. Le système d'acquisition peut alors décider de ne prendre en compte que les signaux reçus depuis la passerelle qui est à jour. Dans la suite de la description, il est fait référence à la passerelle 2 et les caractéristiques correspondantes sont aussi applicables à la passerelle 2'. Il est aussi fait référence à une communication de la passerelle 2 avec les noeuds 1A et 1B et d'une communication de la passerelle 2' avec le noeud 1C. On peut prévoir que le système de passerelle comprend une seule passerelle. Selon différents modes de réalisation, la ou chaque passerelle 2, 2' peut communiquer avec chacun des noeuds selon l'un et/ou l'autre protocole de manière directe ou indirecte.

La passerelle 2 est disposée sur ou à proximité de la structure 100 à surveiller de manière à pouvoir communiquer avec le système d'acquisition 1. Préférentiellement, la passerelle 2 est située dans une zone dégagée permettant de capter un signal GNSS 8. Ainsi, la passerelle 2 comprend de préférence un dispositif GNSS configuré pour recevoir une donnée d'horloge de référence et permettre ainsi de synchroniser son horloge interne.

La passerelle 2 permet de communiquer avec les noeuds 1A, 1B et un serveur 3 du système 3, 3' de serveur distant. En particulier, la passerelle 2 permet de collecter des données vibratoires Dvib fournies par les noeuds 1A, 1B du système d'acquisition 1. La passerelle 2 permet en outre de transmettre ces données au serveur 3 distant. De manière similaire, la passerelle 2' permet de communiquer avec le noeud 1C et un serveur 3' du système 3, 3' de serveur distant. Le serveur 3' peut être le même que le serveur 3. Les données vibratoires Dvib peuvent être utilisées pour l'analyse modale opérationnelle de la structure.

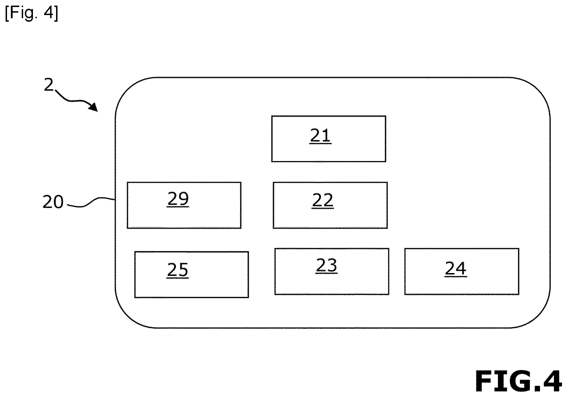

Comme illustré à la Figure 4, la passerelle 2 comprend une unité de pilotage 21 et des modules de communication radio 22, 23, 24.

Un premier module de communication radio 22 est configuré pour communiquer avec les noeuds 1A, 1B selon le premier protocole pour leur transmettre un signal TL21 (ou TL21rvl comme expliqué ci-après). Le premier module de communication radio 22 est de préférence une puce LoRa incluant un processeur qui peut être considéré comme faisant partie de l'unité de pilotage 21.

Un deuxième module de communication radio 23 est configuré pour communiquer avec le système d'acquisition 1 pour collecter les données vibratoires Dvib générées par les noeuds 1A, 1B.

Un troisième module de communication radio 24 est configuré pour communiquer avec le serveur 3 distant pour transmettre les données vibratoires Dvib collectées et pour recevoir un signal d'instruction T32.

La passerelle 2 comprend aussi une source d'alimentation interne 25, de préférence à usage unique, telle que des piles à usage unique, de préférence au lithium. En variante, une ou des batteries peuvent être prévues. Selon un mode de réalisation particulier, on peut aussi prévoir que la passerelle soit munie d'un système de raccordement à une alimentation externe.

Selon un mode de réalisation particulier, on peut prévoir que la passerelle inclut aussi un système de capteur vibratoire, qui peut comprendre un ou plusieurs capteurs vibratoires comme pour chaque noeud. La passerelle peut ainsi offrir une fonction d'acquisition de données vibratoires comme chaque noeud et être alors considérée comme étant un noeud du système d'acquisition en plus de sa fonction de passerelle avec le système de serveur distant.

Le deuxième module de communication radio 23 est configuré pour communiquer avec le système d'acquisition 1 selon le deuxième protocole, qui est de préférence le même protocole que celui utilisé par les noeuds du système d'acquisition 1 pour communiquer entre eux de proche en proche. Ainsi dans l'exemple illustré aux figures, le deuxième protocole est de type Wifi Mesh. Le deuxième module de communication radio 23 peut ainsi être une puce Wifi, en particulier configurée pour fonctionner selon le protocole Wifi Mesh, incluant un processeur qui peut être considéré comme faisant partie de l'unité de pilotage 21.

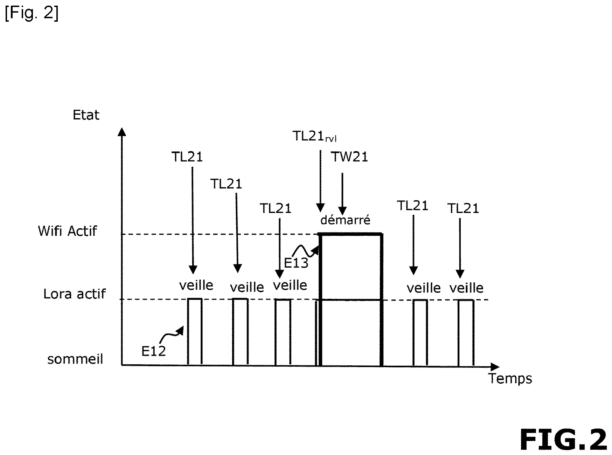

Le premier module de communication radio 22 émet périodiquement un signal par exemple toutes les 15 minutes. Ce signal est noté de manière générale TL21 lorsqu'il ne contient pas d'instruction de réveil et TL21rvl lorsqu'il comprend une instruction de réveil (Figures 1 et 2). Avantageusement, chacun des noeuds du système d'acquisition qui reçoit ce signal, ajuste le moment d'ouverture d'une prochaine fenêtre d'écoute en fonction de ce signal, par exemple en fonction d'une donnée d'horodatage inclue dans le signal, de manière à ne pas manquer la prochaine émission de signal, tout en permettant au noeud de revenir à un mode sommeil entre deux phases d'écoute pour limiter la consommation d'énergie du noeud. Autrement dit, chaque noeud se sert du signal d'instruction dont la période d'émission par la passerelle 2 est connue pour synchroniser la fenêtre d'écoute suivante avec l'émission du signal d'instruction suivant.

Ce processus permet à chaque noeud de recaler sa fenêtre d'écoute, quand bien même une dérive d'horloge interne pourrait apparaitre. Chaque noeud peut ainsi rester en sommeil hors des temps d'écoute tout en s'assurant qu'une fenêtre d'écoute soit ouverte au moment où le système de passerelle émet un signal d'instruction.

Comme illustré à la Figure 2, lorsque que le signal comprend une instruction de réveil (le signal est alors noté ici TL21rvl) alors le noeud qui a reçu le signal TL21rvl passe en mode démarré dans lequel la communication WIFI de la puce Wifi 12 est activée (démarrée), de même qu'un processeur de l'unité de pilotage 11 qui exécute un programme informatique pour émettre un signal TW21 (voir Figure 1) de manière à requérir auprès de ladite passerelle 2 (de manière directe ou en passant par un noeud intermédiaire), une instruction d'activité TW21. Le programme permet d'exécuter des opérations correspondant à l'instruction d'activité reçue.

Lorsque ladite instruction d'activité TW21 est une instruction d'acquisition, l'unité de pilotage de chaque noeud concerné par ladite instruction d'acquisition, pilote l'acquisition des signaux vibratoires par le système de capteur et la génération de données vibratoires Dvib correspondantes.

Les données vibratoires Dvib, éventuellement après traitement (par un filtrage de bruits parasites), sont transmises de proche en proche, du noeud 1B au noeud 1A dans l'exemple illustré à la Figure 1, puis à la passerelle 2 qui les enregistre dans une mémoire de données. De manière similaire, les données vibratoires générées par le noeud 1C sont transmises à la passerelle 2'.

Selon un mode de réalisation particulier, le signal TL21 ou TL21rvl envoyé par le système de passerelle selon le premier protocole (LoRaWAN) comprend :
- un identifiant de la structure associée au système de génération et de collecte (pour éviter que ce signal soit pris en compte par des noeuds d'un autre système associé à une autre structure voisine);
- une donnée d'horodatage, par exemple l'heure absolue;
- une donnée de paramétrage correspondant à un fonctionnement du système d'acquisition selon un paramétrage souhaité.

Lorsque cette donnée de paramétrage est reconnue par le ou les noeuds du système d'acquisition qui reçoivent le signal, alors le signal reçu est interprété par les noeuds comme un simple signal dit de synchronisation qui est utilisé pour recaler la fenêtre d'écoute et dont la donnée de paramétrage est utilisée pour sélectionner le paramétrage prédéfini correspondant du ou des noeuds. Le signal est alors considéré comme ne contenant pas d'instruction de réveil.

Lorsque cette donnée de paramétrage n'est pas reconnue par le ou les noeuds du système d'acquisition 1 qui reçoivent le signal, alors cette donnée de paramétrage non reconnue est interprétée comme étant une instruction de réveil, de sorte que, comme expliqué ci-avant, le noeud démarre un processeur principal et la communication selon le deuxième protocole (Wifi Mesh) pour requérir de la part du système de passerelle, une instruction d'activité TW21 qui peut être une instruction d'acquisition de signaux vibratoires. Avantageusement, le signal reçu qui comprend l'instruction de réveil est aussi utilisé pour recaler la fenêtre d'écoute.

Le module de communication 24 permet à la passerelle 2 de communiquer avec le serveur 3 distant selon un troisième protocole de communication radio, qui est de préférence distinct des premier et deuxième protocoles utilisés par la passerelle pour communiquer avec les noeuds et du protocole utilisée par les noeuds pour communiquer entre eux. Selon un aspect particulier, le troisième protocole de communication de la passerelle 2 avec le serveur 3 est un protocole longue portée, de préférence de type cellulaire, et à faible consommation d'énergie.

Le troisième protocole de communication radio est par exemple un réseau de type réseau de téléphonie mobile, de préférence adapté à l'internet des objets. Le troisième protocole de communication avec le serveur 3 peut ainsi être un protocole du type LTE-M, et le module de communication 24 peut être alors une puce LTE-M.

Ainsi, la passerelle 2 peut transmettre les données vibratoires collectées au serveur 3 distant à l'aide du module de communication radio 24.

Comme rappelé ci-dessus, les données vibratoires Dvib collectées par la passerelle 2 peuvent être traitées par la passerelle 2 avant transmission au serveur 3 distant. En particulier, on peut prévoir que l'unité de pilotage de la passerelle 2 comprend un module de traitement configuré pour calculer des données correspondant à des indicateurs de dommage et à des paramètres modaux.

La passerelle 2 peut recevoir du serveur 3 distant des instructions comprenant notamment des instructions de paramétrage des noeuds et/ou des instructions de déclenchement d'acquisition. Les instructions reçues du serveur 3 peuvent en outre comprendre des instructions de paramétrage de la passerelle 2.

De manière similaire aux noeuds, la passerelle comprend une ou des antennes permettant de communiquer selon les différents protocoles de communication choisis. On peut prévoir qu'une antenne soit commune à la communication selon des protocoles de communication radio différents ou prévoir une antenne distincte par protocole de communication radio.

Selon un aspect particulier, on peut prévoir que, à la différence des noeuds, la ou chaque antenne soit située à l'extérieur du boîtier 20 de la passerelle. En variante, on peut prévoir que ladite ou chaque antenne soit intégrée à l'intérieur du boîtier.

Selon un aspect particulier, la passerelle 2 comprend aussi un capteur d'humidité et/ou un capteur de température.

Avantageusement et de manière similaire aux noeuds, la passerelle comprend un interrupteur magnétique 29 activable par aimant qui est logé dans le boîtier et qu'un opérateur peut activer à l'aide d'un aimant.

Selon un aspect particulier, le système de passerelle transmet aux noeuds du système d'acquisition des signaux TL21 de manière plus fréquente que les signaux TL21rvl comprenant une instruction de réveil, par exemple pour lancer une opération d'acquisition de signaux vibratoires par le système d'acquisition 1, qui entrainent une activation de la puce Wifi.

Une telle configuration permet de conserver une autonomie suffisante du système de génération et de collecte de données, tout en bénéficiant d'un fonctionnement performant du système pour générer des données vibratoires utiles à la vérification de l'état de la structure.

Ainsi, même si le deuxième protocole (Wifi ou Wifi Mesh dans l'exemple illustré aux figures), consomme plus d'énergie que le premier protocole (LoRaWAN dans l'exemple illustré aux figures), l'utilisation de la communication selon ce deuxième protocole reste limitée dans le temps pour effectuer des activités particulières, dont la collecte des données vibratoires générées, tandis que le premier protocole (LoRaWAN), dont la consommation d'énergie est faible, est utilisé pour transmettre des signaux du système de passerelle aux noeuds du système d'acquisition 1 lorsque lesdits noeuds sont en veille.

### Système de serveur distant

Le système de serveur distant comprend un ou plusieurs serveurs 3, 3' avec lesquels peut communiquer le système 2, 2' de passerelle comme expliqué ci-avant. Dans l'exemple illustré à la Figure 1, le système de serveur distant comprend un serveur 3 avec lequel communique la passerelle 2 et un serveur 3' avec lequel communique la passerelle 2'. Le système 2, 2' de passerelle permet ainsi de fournir au système 3, 3' de serveur distant, et donc à un utilisateur distant, des données relatives aux signaux acquis par les noeuds 1A, 1B, 1C qui ont été éventuellement traités.

Les données vibratoires transmises par le système de passerelle au système de serveur distant peuvent être analysées à l'aide d'un programme d'analyse qui peut être exécuté par exemple par le système de serveur distant ou par une unité de traitement distincte.

Le programme d'analyse peut être configuré pour fournir des données relatives à l'état de la structure obtenues à partir des données collectées. Le programme d'analyse peut ainsi fournir des indicateurs, telles que des notes de 1 à 10, en fonction des résultats d'une analyse modale opérationnelle effectuée à partir des données collectées, pour que l'utilisateur puisse décider si une intervention sur la structure est nécessaire.

Selon un aspect particulier, le système de serveur distant héberge un programme de gestion du système de collecte et de génération de données, qui comprend une interface utilisateur permettant à un utilisateur de définir des instructions T32 destinées au système de passerelle et/ou au système d'acquisition. Ainsi, on peut prévoir qu'un utilisateur connecté au système de serveur distant puisse définir, à distance, des paramètres ou activités pour le système de passerelle ou le système d'acquisition.

Les instructions T32 peuvent ainsi comprendre des instructions de paramétrage du système 2, 2' de passerelle et/ou des instructions de paramétrage ou de fonctionnement (activité) à transmettre au système d'acquisition 1.

Les instructions transmises au système d'acquisition comprennent par exemple:
- une instruction de fonctionnement en mode « normal » du système d'acquisition 1 correspondant à une instruction d'acquisition hebdomadaire d'une durée de 20 minutes (par semaine); ou
- une instruction de fonctionnement en mode « urgence » du système d'acquisition 1 correspondant à une instruction d'acquisition d'une durée de 20 minutes par heure pendant 24 h (de préférence dès la réception de ladite instruction par les noeuds).

Les instructions reçues par le système d'acquisition 1 peuvent concerner tous les noeuds ou une partie seulement des noeuds.

### Exemple de fonctionnement

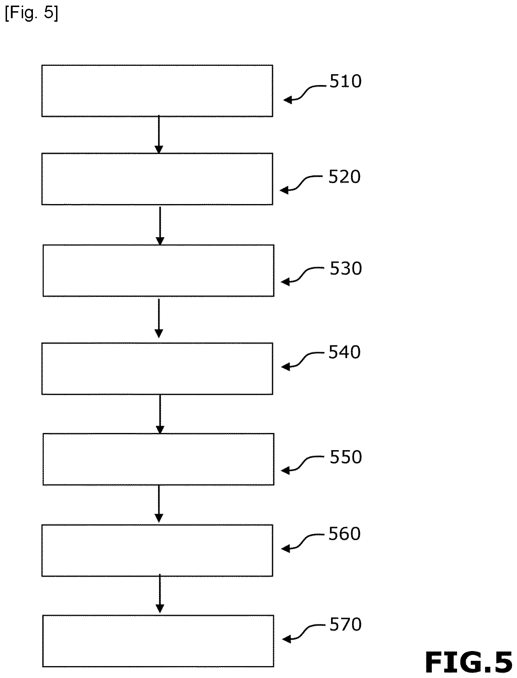

En référence aux figures et en particulier à la Figure 5, il est proposé ci-dessous un exemple de procédé de génération et de collecte de données vibratoires en vue de la détermination de l'état d'une structure 100. Dans cet exemple, la structure est un pont mais pourrait être d'un autre type.

A l'étape 510, les noeuds 1A, 1B, 1C sont déployés en étant fixés sur le pont selon un schéma prédéfini correspondant à différentes positions sur le pont, par exemple tous les cinq mètres. La passerelle 2 et la passerelle 2' sont positionnées sur ou à proximité de la structure de manière à pouvoir communiquer respectivement avec les noeuds 1A, 1B et avec le noeud 1C. Comme rappelé ci-dessus, on peut prévoir qu'une ou chaque passerelle communique de manière directe avec un noeud ou par l'intermédiaire d'un autre noeud. On peut aussi prévoir que le système de passerelle ne comprend qu'une passerelle et que celle-ci est apte à communiquer de manière directe ou indirecte avec les noeuds.

Initialement, un opérateur allume les passerelles et les noeuds à l'aide d'un aimant comme expliqué ci-avant.

A l'aide d'un terminal portable 9 (Figure 1), tel qu'un téléphone intelligent muni d'une application informatique, l'opérateur peut effectuer un paramétrage initial de chaque noeud et de chaque passerelle par exemple par Wifi.

On peut ainsi prévoir qu'à l'allumage le module de communication radio 13, 23 (Wifi) de chaque noeud et de chaque passerelle soit activé, et qu'après le paramétrage initial et/ou après un certain temps, le module de communication 13 Wifi soit éteint.

En particulier, après une étape de paramétrage initial, chaque noeud 1A, 1B, 1C peut revenir à un mode sommeil dans lequel les modules de communications radio 12 (LoRaWAN) et 13 (Wifi) sont éteints, tandis qu'un circuit d'horloge interne du noeud, formant par exemple partie de l'unité de pilotage 11, permet, lorsqu'une durée donnée est écoulée, d'activer le module de communication radio 12 (LoRaWAN) pour déclencher l'ouverture d'une fenêtre d'écoute.

Les noeuds 1A, 1B reçoivent ainsi périodiquement de la passerelle 2 un signal TL21, TL21rvl. De même le noeud 1C reçoit périodiquement un signal de la passerelle 2'. Comme expliqué ci-avant, le moment d'ouverture de la prochaine fenêtre d'écoute peut être ajusté en fonction du moment de réception du signal reçu.

L'exemple de la Figure 2 illustre, pour un noeud donné, tel que le noeud 1A, l'ouverture dans le temps de plusieurs fenêtres d'écoute correspondant à un passage du mode sommeil au mode veille suite à l'activation E12 du module de communication radio 12 LoRaWAN de manière à pouvoir recevoir des signaux TL21 de la passerelle 2 selon le protocole LoRaWAN . Si le signal TL21 ne contient pas d'instruction de réveil, ce qui est le cas pour les trois premier signaux reçus illustrés à la Figure 3, le noeud 1A revient en mode sommeil à la fin de la fenêtre d'écoute en désactivant le module de communication radio 12 LoRaWAN , le module de communication radio 13 Wifi restant aussi désactivé.

Lorsque à l'étape 520, le signal TL21rvl émis par la passerelle contient une instruction de réveil, comme c'est le cas du signal noté TL21rvl reçu par le noeud 1A dans l'exemple illustré à la Figure 2, le noeud 1A passe du mode veille au mode démarré, en procédant à l'activation E13 du module de communication radio 13 Wifi.

Selon un aspect particulier, le noeud 1A démarre aussi un processeur, formant partie de l'unité de pilotage 11, qui peut être intégré dans une puce, telle que la puce Wifi, avec le module de communication Wifi pour exécuter un programme informatique permettant de communiquer en Wifi avec la passerelle ou un autre noeud et d'effectuer des opérations, telles que le paramétrage du noeud 1A ou l'exécution d'une activité d'acquisition de signaux vibratoires.

A l'étape 530, le noeud 1A émet alors à destination de la passerelle 2 une requête d'instruction d'activité. On peut prévoir que chaque noeud émette une requête d'instruction d'activité ou qu'une partie seulement des noeuds émette une requête d'instruction d'activité et que l'instruction d'activité reçue comprend des instructions pour chaque noeud.

En réponse à l'émission de la requête d'instruction d'activité, la passerelle 2 émet à l'étape 540 selon le deuxième protocole (Wifi Mesh), un signal d'instruction d'activité TW12. Lorsque le signal d'instruction d'activité TW12 comprend une instruction d'acquisition, l'unité de pilotage 11 du noeud 1A déclenche à l'étape 550 une opération d'acquisition de signal vibratoire en activant le système de capteur et génère des données vibratoires à partir des signaux vibratoires acquis.

A l'étape 560, les données vibratoires générées par le noeud 1A sont ensuite transmises selon le deuxième protocole au système 2, 2' de passerelle.

La description réalisée pour le noeud 1A peut s'appliquer aux autres noeuds 1B, 1C du système d'acquisition. Pour rappel la description réalisée pour une communication entre la passerelle 2 et les noeuds 1A, 1B s'applique aussi à la communication entre la passerelle 2' et le noeud 1C.

Selon un aspect particulier, le noeud 1B transmet au noeud 1A les données vibratoires générées et le noeud 1A les retransmet, avec également les données vibratoires qu'il a générées, à la passerelle 2.

A l'étape 570, la passerelle 2 qui a collecté les données vibratoires des noeuds 1A, 1B peut les transmettre au serveur 3, éventuellement après un traitement, qui peut comprendre une compression, un filtrage de bruits parasites ou d'autres opérations.

Comme illustré à la Figure 2, après une activité d'acquisition qui a abouti à la collecte des données vibratoires par la passerelle 2, le noeud 1A repasse en mode sommeil de sorte que ses modules de communication radio 12, 13 sont inactifs. Au bout d'une durée prédéfinie comme expliqué ci-dessus et comme illustré à la Figure 2, le circuit d'horloge interne déclenche le passage en mode veille en activant le module de communication radio 12 (LoRaWAN ) pour ouvrir une fenêtre d'écoute pour recevoir un signal de la passerelle.

La consommation énergétique d'un noeud ou d'une passerelle est de préférence de l'ordre de 1 mW.

Afin d'optimiser la consommation d'énergie, les noeuds du système d'acquisition sont ainsi en sommeil en dehors des périodes de temps nécessaires à l'acquisition des signaux vibratoires et à la génération des données vibratoires, à un éventuel traitement des données, et à leur envoi vers le système de passerelle.

Les données vibratoires collectées permettent d'effectuer une modélisation de la structure qui peut être mise à jour en fonction des phases d'acquisition répétées au cours du temps, ledit modèle pouvant être sollicité pour analyser l'évolution dynamique de la structure et fournir au cours du temps des indicateurs pertinents sur l'état de santé du pont.

Les phases d'acquisition peuvent ainsi comprendre des mesures des signaux vibratoires au fur et à mesure des semaines, par exemple une fois par semaine pendant quelques minutes par exemple vingt minutes.

Les fonctions et étapes décrites peuvent être mises en oeuvre sous forme de programme informatique ou via des composants matériels (p. ex. des réseaux de portes programmables). En particulier, les fonctions et étapes opérées par une unité de pilotage ou un module ou une puce, peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

Chaque unité de pilotage se présente par exemple sous la forme d'un processeur et d'une mémoire de données dans laquelle sont stockées des instructions informatiques exécutables par ledit processeur. Le terme processeur doit s'entendre au sens large et inclut aussi un microprocesseur.

L'unité de pilotage est ainsi une unité électronique et/ou informatique. Lorsqu'il est précisé que ladite unité est configurée pour réaliser une opération donnée, cela signifie que l'unité comprend des instructions informatiques et les moyens d'exécution correspondants qui permettent de réaliser ladite opération et/ou que l'unité comprend des composants électroniques correspondants.

### Avantages

Les systèmes de capteur des noeuds du système d'acquisition peuvent être éteints la majorité du temps, et peuvent être activés selon un paramétrage donné et lorsque requis par le système de passerelle, limitant ainsi la consommation d'énergie.

En particulier, l'utilisation d'un premier protocole de communication de type LPWAN, tel que le protocole LoRaWAN , entre le système de passerelle et le système d'acquisition, permet de réveiller les noeuds, tout en permettant une fois les noeuds réveillés d'activer un deuxième protocole de communication à plus haut débit tel qu'un protocole de type Wifi, de préférence le protocole Wifi Mesh, ce qui permet d'activer les capteurs vibratoires à certains moments seulement pour limiter la consommation d'énergie, tout en bénéficiant d'un débit de communication suffisant lorsque cela est nécessaire.

Le système de génération et de collecte permet ainsi de mettre à disposition d'un utilisateur des données vibratoires utiles relatives aux signaux qui ont été mesurés par des capteurs vibratoires performants, selon un processus de collecte intelligent qui permet de limiter la consommation en énergie.

Les données collectées peuvent être utilisées pour réaliser une analyse modale opérationnelle de la structure, qui permet de suivre l'évolution dans le temps des caractéristiques dynamiques de la structure. Selon un aspect particulier et pour une structure telle qu'un pont, des fréquences modales inférieures à 50 Hz sont recherchées. Les résultats de l'analyse modale opérationnelle de la structure peuvent indiquer une défaillance à venir ou une pathologie de la structure et permettent de fournir des indicateurs simples de santé de la structure.

Une telle conception permet d'obtenir un système de collecte autonome, de faible consommation tout en bénéficiant d'un fonctionnement fiable et efficace grâce à l'utilisation de protocoles de transmission de données adaptés.

Une telle conception du système de génération et collecte de données permet de bénéficier d'un fonctionnement autonome pendant plusieurs années et sans fil, ce qui facilite sa maintenance.

Grâce aux données générées et collectées à l'aide du système selon l'invention, il est possible de procéder à une analyse modale opérationnelle de la structure, ce qui offre entre autres avantages :
- un analyse dynamique globale de l'état de santé interne et externe de la structure;
- une mise en oeuvre opérationnelle qui est simple et peu intrusive puisqu'elle ne nécessite pas de source d'alimentation extérieure, et pas d'interruption de service de la structure; et
- la possibilité de déduire par traitements avancés des données collectées les caractéristiques dynamiques de la structure, telles que les fréquences de résonance, l'amortissement des modes, les déformées modales.

L'invention n'est pas limitée aux modes de réalisation illustrés dans les dessins.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Système de génération et de collecte de données en vue de la détermination de l'état d'une structure (100),
le système de génération et de collecte de données comprenant :
- un système d'acquisition (1) comprenant des dispositifs d'acquisition de signaux vibratoires, appelés noeuds (1A, 1B, 1C), lesdits noeuds (1A, 1B, 1C) étant aptes à être répartis en plusieurs endroits de la structure (100), lesdits noeuds (1A, 1B, 1C) étant configurés pour acquérir des signaux vibratoires et générer des données vibratoires (Dvib) relatives aux signaux vibratoires acquis;
- un système (2, 2') de passerelle de communication configuré pour communiquer avec le système d'acquisition (1) selon un premier protocole de communication radio pour transmettre un signal (TL21, TL21rvl) au système d'acquisition (1);
**caractérisé en ce que** le système (2, 2') de passerelle de communication est configuré pour communiquer avec le système d'acquisition (1) selon un deuxième protocole de communication radio, dont la consommation énergétique est supérieure à celle du premier protocole de communication radio, pour collecter les données vibratoires générées par le système d'acquisition (1);
et le système d'acquisition (1) est configuré pour :
- recevoir le signal (TL21, TL21rvl) du système (2,2') de passerelle, selon le premier protocole, et
lorsque le signal (TL21rvl) comprend une instruction de réveil,
- envoyer au système (2, 2') de passerelle un signal (TW12) de requête d'instruction d'activité selon le deuxième protocole,
- recevoir du système de passerelle (2, 2'), selon le deuxième protocole, un signal d'instruction d'activité (TW21) comprenant une instruction d'acquisition,
- déclencher une opération d'acquisition de signal vibratoire et générer des données vibratoires (Dvib) à partir des signaux vibratoires acquis; et
- transmettre selon le deuxième protocole les données vibratoires (Dvib) au système (2, 2') de passerelle.

2. Système selon la revendication 1, dans lequel ledit système (2,2') de passerelle étant configuré pour émettre périodiquement le signal (TL21, TL21rvl) selon le premier protocole, le système d'acquisition (1) est configuré pour, à l'état ouvert d'une fenêtre d'écoute, recevoir ledit signal (TL21, TL21rvl) et pour définir le moment de déclenchement de l'ouverture d'une prochaine fenêtre d'écoute en fonction du signal reçu.

3. Système selon l'une quelconque des revendications précédentes, dans lequel le système d'acquisition (1) est configuré pour :
- entre la fin d'une fenêtre d'écoute et le déclenchement de l'ouverture de la fenêtre d'écoute suivante, être dans un mode de fonctionnement, appelé mode sommeil, dans lequel la communication selon le premier protocole et la communication selon le deuxième protocole sont désactivées;
- lors du déclenchement de l'ouverture d'une fenêtre d'écoute, basculer dans un mode de fonctionnement, appelé mode veille, dans lequel la communication selon le premier protocole est activée, tandis que la communication selon le deuxième protocole reste inactivée; et
- lors de la réception d'un signal (TL21rvl) comprenant une instruction de réveil, basculer dans un mode de fonctionnement, appelé mode démarré, dans lequel la communication selon le deuxième protocole est activée.

4. Système selon l'une quelconque des revendications précédentes, dans lequel le système d'acquisition (1) est aussi configuré pour :
- recevoir du système (2, 2') de passerelle un signal d'instruction d'activité (TW21) qui comprend un signal d'instruction de paramétrage, et
- modifier au moins un paramètre de fonctionnement du système d'acquisition (1), tel que la durée d'une acquisition de signaux vibratoires et la fréquence de déclenchement de l'opération d'acquisition.

5. Système selon l'une quelconque des revendications précédentes, dans lequel le premier protocole de communication radio présente une portée supérieure et/ou un débit inférieur à ceux du deuxième protocole.

6. Système selon l'une quelconque des revendications précédentes, dans lequel le système (2, 2') de passerelle est configuré pour communiquer avec un système (3,3') de serveur distant selon un troisième protocole de communication radio pour transmettre au système (3,3') de serveur distant les données vibratoires collectées et pour recevoir du système (3,3') de serveur distant des données d'instruction (T32) comprenant des instructions de paramétrage du système (2, 2') de passerelle et/ou des instructions de paramétrage et/ou d'activité à transmettre au système d'acquisition (1).

7. Système selon la revendication précédente, dans lequel le premier protocole est un protocole réseau étendu longue portée, le deuxième protocole est un protocole Wifi maillé, et le troisième protocole de communication radio est un protocole de communication pour l'Internet des objets, de préférence un protocole de type LTE-M.

8. Système selon l'une quelconque des revendications précédentes, dans lequel les noeuds (1A, 1B, 1C) du système d'acquisition (1) sont configurés pour communiquer entre eux selon un protocole de communication radio, de préférence le même protocole que le deuxième protocole de communication radio, permettant à chaque noeud (1A, 1B, 1C) de transmettre des données à un noeud voisin.

9. Système selon l'une quelconque des revendications précédentes, dans lequel chaque noeud (1A, 1B, 1C) comprend un boîtier (10) dépourvu de connecteur externe et/ou d'antenne externe.

10. Système selon l'une quelconque des revendications précédentes, dans lequel chaque noeud (1A, 1B, 1C) et/ou le système (2, 2') de passerelle comprend un boîtier (10, 20) et un interrupteur magnétique (19, 29) pour commander l'arrêt et la mise en marche dudit noeud (1A, 1B, 1C) et/ou dudit système (2, 2') de passerelle, ledit interrupteur magnétique étant inclus dans le boîtier et actionnable depuis l'extérieur du boîtier par un aimant.

11. Système selon l'une quelconque des revendications précédentes, dans lequel le système (2, 2') de passerelle comprenant une ou plusieurs passerelles, la ou chaque passerelle comprend :
- un premier module de communication radio (22), configuré pour communiquer selon le premier protocole de communication avec le système d'acquisition (1) pour lui transmettre des signaux (TL21, TL21rvl);
- un deuxième module de communication radio (23), configuré pour communiquer selon le deuxième protocole de communication avec le système d'acquisition (1) pour recevoir un signal (TW12) de requête d'instruction d'activité, transmettre une instruction d'activité (TW21) et collecter les données vibratoires (Dvib) générées par le système d'acquisition (1);
- un troisième module de communication (24), configuré pour communiquer selon un troisième protocole de communication avec le système (3, 3') de serveur distant pour transmettre les données vibratoires (Dvib) collectées et pour recevoir un signal d'instruction (T32); et
- une source d'alimentation interne (25).

12. Système selon l'une quelconque des revendications précédentes, dans lequel chaque noeud (1A, 1B, 1C) du système d'acquisition (1) comprend :
- un système (18) de capteur vibratoire permettant d'acquérir les signaux vibratoires;
- un premier module de communication radio (12), configuré pour recevoir selon le premier protocole de communication un signal (TL21, TL21rvl) transmis par le système (2, 2') de passerelle;
- un deuxième module de communication radio (13), configuré pour communiquer selon le deuxième protocole de communication avec le système (2, 2') de passerelle,;
- une source d'alimentation interne (14).

13. Procédé de génération et de collecte de données en vue de la détermination de l'état d'une structure (100), à l'aide d'un système d'acquisition (1) et d'un système (2, 2') de passerelle, ledit système d'acquisition (1) comprenant des dispositifs d'acquisition de signaux vibratoires, appelés noeuds (1A, 1B, 1C), lesdits noeuds (1A, 1B, 1C) étant répartis en plusieurs endroits de la structure (100), lesdits noeuds (1A, 1B, 1C) étant configurés pour acquérir des signaux vibratoires et générer des données vibratoires (Dvib) relatives aux signaux vibratoires acquis,
le procédé comprenant la réception (520) par le système d'acquisition (1) selon un premier protocole de communication radio d'un signal (TL21rvl) provenant du système (2,2') de passerelle,
**caractérisé en ce que**, ledit signal (TL21rvl) provenant du système (2,2') de passerelle comprenant une instruction de réveil, le procédé comprend les étapes suivantes :
- émission (530) par le système d'acquisition (1) d'un signal (TW12) de requête d'instruction d'activité à destination du système (2, 2') de passerelle selon un deuxième protocole de communication radio, dont la consommation énergétique est supérieure à celle du premier protocole de communication radio;
- réception (540) par le système d'acquisition (1), selon le deuxième protocole de communication radio, d'une instruction d'activité (TW21) comprenant une instruction d'acquisition provenant du système (2, 2') de passerelle;
- déclenchement (550) par le système d'acquisition (1) de l'acquisition de signaux vibratoires, et génération de données vibratoires (Dvib) à partir des signaux vibratoires acquis; et
- transmission (560) par le système d'acquisition (1) au système (2, 2') de passerelle par le système d'acquisition (1), selon le deuxième protocole de communication radio, des données vibratoires (Dvib) générées.

14. Procédé selon la revendication 13, dans lequel le système (2, 2') de passerelle transmet (570) à un système (3, 3') de serveur distant les données vibratoires (Dvib) reçues du système d'acquisition (1).

15. Procédé selon la revendication 14, dans lequel le système (3, 3') de serveur distant exécute un programme d'analyse modale opérationnelle de la structure à partir des données vibratoires (Dvib) reçues et génère, en fonction des résultats de l'analyse modale opérationnelle, une information relative à l'état de la structure.

## Patentansprüche

1. System zum Erzeugen und Sammeln von Daten zur Bestimmung des Zustands einer Struktur (100),
das System zum Erzeugen und Sammeln von Daten umfassend:
- ein Erfassungssystem (1), umfassend Vorrichtungen zum Erfassen von Vibrationssignalen, die als Knoten (1A, 1B, 1C) bezeichnet werden, wobei die Knoten (1A, 1B, 1C) geeignet sind, um an mehreren Stellen der Struktur (100) verteilt zu sein, wobei die Knoten (1A, 1B, 1C) konfiguriert sind, um Vibrationssignale zu erfassen und Vibrationsdaten (Dvib) zu erzeugen, die sich auf die erfassten Vibrationssignale beziehen;
- ein Kommunikations-Gatewaysystem (2, 2'), das konfiguriert ist, um gemäß einem ersten Funkkommunikationsprotokoll mit dem Erfassungssystem (1) zu kommunizieren, um ein Signal (TL21, TL21rvl) an das Erfassungssystem (1) zu übertragen;
**dadurch gekennzeichnet, dass** das Kommunikations-Gatewaysystem (2, 2') konfiguriert ist, um gemäß einem zweiten Funkkommunikationsprotokoll, dessen Energieverbrauch höher ist als der des ersten Funkkommunikationsprotokolls, mit dem Erfassungssystem (1) zu kommunizieren, um die von dem Erfassungssystem (1) erzeugten Vibrationsdaten zu sammeln;
und wobei das Erfassungssystem (1) zu Folgendem konfiguriert ist:
- Empfangen des Signals (TL21, TL21rvl) von dem Gatewaysystem (2, 2') gemäß dem ersten Protokoll, und
wenn das Signal (TL21rvl) eine Aufweckanweisung umfasst,
- Senden, an das Gatewaysystem (2, 2'), eines Signals (TW12) zum Anfordern einer Aktivitätsanweisung gemäß dem zweiten Protokoll,
- Empfangen, von dem Gatewaysystem (2, 2') gemäß dem zweiten Protokoll, eines Aktivitätsinstruktionssignal (TW21), umfassend eine Erfassungsanweisung,
- Auslösen eines Vibrationssignal-Erfassungsvorgangs und Erzeugen von Vibrationsdaten (Dvib) anhand der erfassten Vibrationssignale; und
- Übertragen, gemäß dem zweiten Protokoll, der Vibrationsdaten (Dvib) an das Gatewaysystem (2, 2').

2. System nach Anspruch 1, wobei das Gatewaysystem (2, 2') konfiguriert ist, um periodisch das Signal (TL21, TL21rvl) gemäß dem ersten Protokoll zu emittieren, das Erfassungssystem (1) konfiguriert ist, um in dem offenen Zustand eines Abhörfensters das Signal (TL21, TL21rvl) zu empfangen und um den Auslösezeitpunkt für die Öffnung eines nächsten Abhörfensters abhängig von dem empfangenen Signal zu definieren.

3. System nach einem der vorherigen Ansprüche, wobei das Erfassungssystem (1) zu Folgendem konfiguriert ist:
- zwischen dem Ende eines Abhörfensters und dem Auslösen der Öffnung des nächsten Abhörfensters in einem Betriebsmodus, dem sogenannten Schlafmodus, zu sein, in dem die Kommunikation gemäß dem ersten Protokoll und die Kommunikation gemäß dem zweiten Protokoll deaktiviert sind;
- bei Auslösen der Öffnung eines Abhörfensters, Umschalten in einen Betriebsmodus, den sogenannten Standby-Modus, in dem die Kommunikation gemäß dem ersten Protokoll aktiviert ist, während die Kommunikation gemäß dem zweiten Protokoll inaktiv bleibt; und
- bei Empfangen eines Signals (TL21rvl), umfassend eine Aufweckanweisung, Umschalten in einen Betriebsmodus, den so genannten Startmodus, in dem die Kommunikation gemäß dem zweiten Protokoll aktiviert ist.

4. System nach einem der vorherigen Ansprüche, wobei das Erfassungssystem (1) auch zu Folgendem konfiguriert ist:
- Empfangen, von dem Gatewaysystem (2, 2'), eines Aktivitätsanweisungssignals (TW21), das ein Parametrieranweisungssignal umfasst, und
- Ändern mindestens eines Betriebsparameters des Erfassungssystems (1), wie beispielsweise die Dauer einer Erfassung von Vibrationssignalen und die Häufigkeit der Auslösung des Erfassungsvorgangs.

5. System nach einem der vorherigen Ansprüche, wobei das erste Funkkommunikationsprotokoll eine größere Reichweite und/oder eine geringere Datenrate als die des zweiten Protokolls aufweist.

6. System nach einem der vorherigen Ansprüche, wobei das Gatewaysystem (2, 2') konfiguriert ist, um gemäß einem dritten Funkkommunikationsprotokoll mit einem entfernten Serversystem (3, 3') zu kommunizieren, um die gesammelten Vibrationsdaten an das entfernte Serversystem (3, 3') zu übertragen und um von dem entfernten Serversystem (3, 3') Anweisungsdaten (T32) zu empfangen, umfassend Parametrieranweisungen des Gatewaysystems (2, 2') und/oder Parametrier- und/oder Aktivitätsanweisungen, die an das Erfassungssystem (1) übertragen werden sollen.

7. System nach dem vorherigen Anspruch, wobei das erste Protokoll ein Weitverkehrsnetzprotokoll mit großer Reichweite ist, das zweite Protokoll ein vermaschtes Wifi-Protokoll ist und das dritte Funkkommunikationsprotokoll ein Kommunikationsprotokoll für das Internet der Dinge ist, vorzugsweise ein Protokoll vom Typ LTE-M.

8. System nach einem der vorherigen Ansprüche, wobei die Knoten (1A, 1B, 1C) des Erfassungssystems (1) konfiguriert sind, um gemäß einem Funkkommunikationsprotokoll, vorzugsweise demselben Protokoll wie das zweite Funkkommunikationsprotokoll, miteinander zu kommunizieren, das es jedem Knoten (1A, 1B, 1C) ermöglicht, Daten an einen benachbarten Knoten zu übertragen.

9. System nach einem der vorherigen Ansprüche, wobei jeder Knoten (1A, 1B, 1C) ein Gehäuse (10) umfasst, das frei von externen Anschlüssen und/oder externen Antennen ist.

10. System nach einem der vorherigen Ansprüche, wobei jeder Knoten (1A, 1B, 1C) und/oder das Gatewaysystem (2, 2') ein Gehäuse (10, 20) und einen Magnetschalter (19, 29) zum Steuern des Aus- und Einschaltens des Knotens (1A, 1B, 1C) und/oder des Gatewaysystems (2, 2') umfasst, wobei der Magnetschalter in dem Gehäuse beinhaltet ist und von außerhalb des Gehäuses durch einen Magneten betätigbar ist.

11. System nach einem der vorherigen Ansprüche, wobei das Gatewaysystem (2, 2') ein oder mehrere Gateways umfasst, wobei das oder jedes Gateways Folgendes umfasst:
- ein erstes Funkkommunikationsmodul (22), das konfiguriert ist, um gemäß dem ersten Kommunikationsprotokoll mit dem Erfassungssystem (1) zu kommunizieren, um ihm Signale (TL21, TL21rvl) zu übertragen;
- ein zweites Funkkommunikationsmodul (23), das konfiguriert ist, um gemäß dem zweiten Kommunikationsprotokoll mit dem Erfassungssystem (1) zu kommunizieren, um ein Signal (TW12) zum Anfordern einer Aktivitätsanweisung zu empfangen, eine Aktivitätsanweisung (TW21) zu übertragen und die von dem Erfassungssystem (1) erzeugten Vibrationsdaten (Dvib) zu sammeln;
- ein drittes Kommunikationsmodul (24), das konfiguriert ist, um gemäß einem dritten Kommunikationsprotokoll mit dem entfernten Serversystem (3, 3') zu kommunizieren, um die gesammelten Vibrationsdaten (Dvib) zu übertragen und ein Anweisungssignal (T32) zu empfangen; und
- ein internes Netzteil (25).

12. System nach einem der vorherigen Ansprüche, wobei jeder Knoten (1A, 1B, 1C) des Erfassungssystems (1) Folgendes umfasst:
- ein Vibrationssensorsystem (18) zum Erfassen der Vibrationssignale;
- ein erstes Funkkommunikationsmodul (12), das konfiguriert ist, um gemäß dem ersten Kommunikationsprotokoll ein Signal (TL21, TL21rvl) zu empfangen, das von dem Gatewaysystem (2, 2') übertragen wird;
- ein zweites Funkkommunikationsmodul (13), das konfiguriert ist, um gemäß dem zweiten Kommunikationsprotokoll mit dem Gatewaysystem (2, 2') zu kommunizieren;
- ein internes Netzteil (14).

13. Verfahren zum Erzeugen und Sammeln von Daten zur Bestimmung des Zustands einer Struktur (100) mittels eines Erfassungssystems (1) und eines Gatewaysystems (2, 2'), das Erfassungssystem (1) umfassend Vorrichtungen zum Erfassen von Vibrationssignalen, die als Knoten (1A, 1B, 1C) bezeichnet werden, wobei die Knoten (1A, 1B, 1C) an mehreren Stellen der Struktur (100) verteilt sind, wobei die Knoten (1A, 1B, 1C) konfiguriert sind, um Vibrationssignale zu erfassen und Vibrationsdaten (Dvib) zu erzeugen, die sich auf die erfassten Vibrationssignale beziehen,
das Verfahren umfassend das Empfangen (520), durch das Erfassungssystem (1), eines Signals (TL21rvl) von dem Gatewaysystem (2, 2') gemäß einem ersten Funkkommunikationsprotokoll,
**dadurch gekennzeichnet, dass**, da das Signal (TL21rvl) von dem Gatewaysystem (2, 2') stammt, das eine Aufweckanweisung umfasst, das Verfahren die folgenden Schritte umfasst:
- Senden (530), durch das Erfassungssystem (1), eines Signals (TW12) zum Anfordern einer Aktivitätsanweisung an das Gatewaysystem (2, 2') gemäß einem zweiten Funkkommunikationsprotokoll, dessen Energieverbrauch höher ist als der des ersten Funkkommunikationsprotokolls;
- Empfangen (540), durch das Erfassungssystem (1) gemäß dem zweiten Funkkommunikationsprotokoll, einer Aktivitätsanweisung (TW21) umfassend eine Erfassungsanweisung, die von dem Gatewaysystem (2, 2') stammt;
- Auslösen (550), durch das Erfassungssystem (1), der Erfassung von Vibrationssignalen und Erzeugung von Vibrationsdaten (Dvib) anhand der erfassten Vibrationssignale; und
- Übertragen (560), durch das Erfassungssystem (1) an das Gatewaysystem (2, 2') durch das Erfassungssystem (1), der erzeugten Vibrationsdaten (Dvib) gemäß dem zweiten Funkkommunikationsprotokoll.

14. Verfahren nach Anspruch 13, wobei das Gatewaysystem (2, 2') die von dem Erfassungssystem (1) empfangenen Vibrationsdaten (Dvib) an ein entferntes Serversystem (3, 3') überträgt (570).

15. Verfahren nach Anspruch 14, wobei das entfernte Serversystem (3, 3') ein Programm zur betrieblichen Modalanalyse der Struktur anhand der empfangenen Vibrationsdaten (Dvib) ausführt und abhängig von den Ergebnissen der betrieblichen Modalanalyse Informationen in Bezug auf den Zustand der Struktur erzeugt.

## Claims

1. A system for generating and collecting data with a view to determining the state of a structure (100),
the system for generating and collecting data comprising:
- an acquisition system (1) comprising devices for acquiring vibration signals, called nodes (1A, 1B, 1C), said nodes (1A, 1B, 1C) being suitable for being distributed at multiple locations of the structure (100), said nodes (1A, 1B, 1C) being configured to acquire vibration signals and to generate vibration data (Dvib) relating to the vibration signals acquired;
- a communication gateway system (2, 2') configured to communicate with the acquisition system (1) using a first radiocommunication protocol to transmit a signal (TL21, TL21rvl) to the acquisition system (1);
**characterized in that** the communication gateway system (2, 2') is configured to communicate with the acquisition system (1) using a second radiocommunication protocol, the energy consumption of which is higher than that of the first radiocommunication protocol, to collect the vibration data generated by the acquisition system (1);
and the acquisition system (1) is configured to:
- receive the signal (TL21, TL21rvl) from the gateway system (2, 2'), using the first protocol, and when the signal (TL21rvl) comprises a wake-up instruction,
- send the gateway system (2, 2') an activity instruction request signal (TW12) according to the second protocol,
- receive, from the gateway system (2, 2'), according to the second protocol, an activity instruction signal (TW21) comprising an acquisition instruction,
- trigger a vibration signal acquisition operation and generate vibration data (Dvib) from the vibration signals acquired; and
- transmit, according to the second protocol, the vibration data (Dvib) to the gateway system (2, 2').

2. The system according to claim 1, wherein said gateway system (2, 2') being configured to periodically transmit the signal (TL21, TL21rvl) according to the first protocol, the acquisition system (1) is configured to, in the open state of a listening window, receive said signal (TL21, TL21rvl) and to define the time of triggering of the opening of a next listening window based on the signal received.

3. The system according to any one of the preceding claims, wherein the acquisition system (1) is configured to:
- between the end of one listening window and the triggering of the opening of the next listening window, be in an operating mode, called sleep mode, wherein communication according to the first protocol and communication according to the second protocol are deactivated;
- when triggering the opening of a listening window, switching to an operating mode, called standby mode, in which communication according to the first protocol is activated, while communication according to the second protocol remains inactivated; and
- when receiving a signal (TL21rvl) comprising a wake-up instruction, switching to an operating mode, called initiated mode, in which communication according to the second protocol is activated.

4. The system according to any one of the preceding claims, wherein the acquisition system (1) is also configured to:
- receive, from the gateway system (2, 2'), an activity instruction signal (TW21) which comprises a parametrization instruction signal, and
- modify at least one operating parameter of the acquisition system (1), such as the duration of an acquisition of vibration signals and the triggering frequency of the acquisition operation.

5. The system according to any one of the preceding claims, wherein the first radiocommunication protocol has a range greater than and/or a bit rate lower than those of the second protocol.

6. The system according to any one of the preceding claims, wherein the gateway system (2, 2') is configured to communicate with a remote server system (3, 3') according to a third radiocommunication protocol to transmit, to the remote server system (3, 3'), the vibration data collected, and to receive, from the remote server system (3, 3'), instruction data (T32) comprising gateway system parametrization instructions (2, 2') and/or parametrization and/or activity instructions to be transmitted to the acquisition system (1).

7. The system according to the preceding claim, wherein the first protocol is a long-range wide area network protocol, the second protocol is a mesh Wi-Fi protocol, and the third radiocommunication protocol is a communication protocol for the Internet of Things, preferably a protocol of the LTE-M type.

8. The system according to any one of the preceding claims, wherein the nodes (1A, 1B, 1C) of the acquisition system (1) are configured to communicate with one another using a radiocommunication protocol, preferably the same protocol as the second radiocommunication protocol, allowing each node (1A, 1B, 1C) to transmit data to a neighboring node.

9. The system according to any one of the preceding claims, wherein each node (1A, 1B, 1C) comprises a housing (10) devoid of any external connector and/or external antenna.

10. The system according to any one of the preceding claims, wherein each node (1A, 1B, 1C) and/or the gateway system (2, 2') comprises a housing (10, 20) and/or a magnetic switch (19, 29) for controlling the stopping and starting of said node (1A, 1B, 1C) and/or of said gateway system (2, 2'), said magnetic switch being included in the housing and being able to be actuated from outside the housing via a magnet.

11. The system according to any one of the preceding claims, wherein the communication gateway system (2, 2') comprising one or more gateways, the or each gateway comprises:
- a first radiocommunication module (22), configured to communicate according to the first communication protocol with the acquisition system (1) to transmit signals (TL21, TL21rvl) thereto;
- a second radiocommunication module (23), configured to communicate according to the second communication protocol with the acquisition system (1) to receive an activity instruction request signal (TW12), transmit an activity instruction (TW21) and collect the vibration data (Dvib) generated by the acquisition system (1);
- a third communication module (24), configured to communicate according to a third communication protocol with the remote server system (3, 3') to transmit the vibration data (Dvib) collected and to receive an instruction signal (T32); and
- an internal power source (25).

12. The system according to any one of the preceding claims, wherein each node (1A, 1B, 1C) of the acquisition system (1) comprises:
- a vibration sensor system (18) allowing the vibration signals to be acquired;
- a first radiocommunication module (12), configured to receive, using the first communication protocol, a signal (TL21, TL21rvl) transmitted by the gateway system (2, 2');
- a second radiocommunication module (13), configured to communicate using the second communication protocol with the gateway system (2, 2'),
- an internal power source (14).

13. A method for generating and collecting data with a view to determining the state of a structure (100), using an acquisition system (1) and a gateway system (2, 2'), said acquisition system (1) comprising devices for acquiring vibration signals, called nodes (1A, 1B, 1C), said nodes (1A, 1B, 1C) being distributed at multiple locations of the structure (100), said nodes (1A, 1B, 1C) being configured to acquire vibration signals and generate vibration data (Dvib) relating to the vibration signals acquired,
the method comprising the reception (520), by the acquisition system (1) according to a first radiocommunication protocol, of a signal (TL21rvl) from the gateway system (2, 2'),
**characterized in that**, said signal (TL21rvl) from the gateway system (2, 2') comprising a wake-up instruction, the method comprises the following steps:
- the acquisition system (1) transmits (530) an activity instruction request signal (TW12) to the gateway system (2, 2') according to a second radiocommunication protocol, the energy consumption of which is higher than that of the first radiocommunication protocol;
- the acquisition system (1) receives (540), according to the second radiocommunication protocol, an activity instruction (TW21) comprising an acquisition instruction from the gateway system (2, 2');
- the acquisition system (1) triggers (550) the acquisition of vibration signals, and generates vibration data (Dvib) based on the vibration signals acquired; and
- the acquisition system (1) transmits (560), to the gateway system (2, 2') via the acquisition system (1), according to the second radiocommunication protocol, the vibration data (Dvib) generated.

14. The method according to claim 13, wherein the gateway system (2, 2') transmits (570), to a remote server system (3, 3'), the vibration data (Dvib) received from the acquisition system (1).

15. The method according to claim 14, wherein the remote server system (3, 3') executes a program for the operational modal analysis of the structure based on the vibration data (Dvib) received and generates, based on the results of the operational modal analysis, information relating to the state of the structure.
